# EUROPEAN PATENT APPLICATION

(11) **EP 4 852 539 A1**
(43) Date of publication of application: **09.12.2026**
(21) Application number: 24930304.1
(22) Date of filing: 22.07.2024
(51) Int. Cl.: H04W 52/14, H04W 24/04, H04W 24/10

(54) **UPLINK POWER CONTROL PROCESSING METHOD AND APPARATUS**

(30) Priority: 22.03.2024 CN 202410329888
(71) Applicant: Honor Device Co., Ltd., Shenzhen, Guangdong 518040 (CN)
(72) Inventor: XUE, Zitao, Shenzhen, Guangdong 518040 (CN)
(74) Representative: Goddar, Heinz J.
(86) International application number: PCT/CN2024/106807
(87) International publication number: WO 2025/194640

(57) **Abstract**

Embodiments of this application provide an uplink power control processing method and apparatus, and relates to the field of terminal technologies. The method includes: A terminal device receives a power configuration field sent by a network device, adjusts an uplink power based on the power configuration field, and determines, based on uplink powers before and after adjustment, whether a power control exception event occurs. When it is determined that the power control exception event occurs, the terminal device reports occurrence of the power control exception event to the network device by using first information, so that the network device can adjust a power configuration field of a target cell in which the power control exception event occurs, thereby resolving an uplink power control exception problem in a targeted manner. In this way, a sudden drop in the uplink power of the terminal device can be avoided, to improve stability and rationality of uplink power control.

## Description

This application claims priority to Chinese Patent Application No. 202410329888.7, filed with the China National Intellectual Property Administration on March 22, 2024 and entitled "UPLINK POWER CONTROL PROCESSING METHOD AND APPARATUS", which is incorporated herein by reference in its entirety.

### TECHNICAL FIELD

This application relates to the field of terminal technologies, and in particular, to an uplink power control processing method and apparatus.

### BACKGROUND

During random access between a terminal device and a network device, the terminal device may adjust an uplink power based on a power ramp-up amplitude, so that the terminal device can complete data interaction during random access.

When an RRC (radio resource control, Radio Resource Control) connection is set up between the terminal device and the network device, the terminal device may use the power ramp-up amplitude during random access as an uplink power adjustment value, to calculate the uplink power of the terminal device. However, if the network device configures a power configuration field corresponding to a PUCCH in an RRC setup message, the power ramp-up amplitude during random access is reset to 0.

Resetting of the power ramp-up amplitude may cause a sudden drop in the uplink power of the terminal device, resulting in an uplink power control exception in the terminal device.

### SUMMARY

Embodiments of this application provide an uplink power control processing method and apparatus, and relate to the field of terminal technologies, thereby avoiding an uplink power control exception of a terminal device.

According to a first aspect, an embodiment of this application provides an uplink power control processing method, applied to a terminal device. The method includes:
in response to a power configuration field sent by a network device, adjusting an uplink power of the terminal device from a first power value to a second power value; sending first information to the network device based on the first power value and the second power value when it is determined that the power control exception event occurs, to enable the network device to adjust a power configuration field of a target cell, where the first information is used to indicate that the power control exception event occurs, and the target cell is a cell in which the power control exception event occurs.

In this way, occurrence of the power control exception event is reported to the network device by using the first information, so that the network device can adjust the power configuration field of the target cell in which the power control exception event occurs, thereby resolving an uplink power control exception problem in a targeted manner, avoiding a sudden drop in the uplink power of the terminal device, and improving stability and rationality of uplink power control.

In a possible implementation, the determining, based on the first power value and the second power value, whether a power control exception event occurs includes:
determining a power drop value, where the power drop value is a difference between the first power value and the second power value; and comparing the power drop value with a first preset threshold to determine whether the power control exception event occurs, where if the power drop value is greater than or equal to the first preset threshold, it is determined that the power control exception event occurs; or
comparing the second power value with a second preset threshold to determine whether the power control exception event occurs, where if the second power value is less than the second preset threshold, it is determined that the power control exception event occurs.

In this implementation, whether the power control exception event occurs is determined based on the power values before and after adjustment, to ensure correctness of the detected power control exception event.

In a possible implementation, the sending first information to the network device includes:
sending uplink control information to the network device, where the uplink control information includes the first information.

In this implementation, the terminal device sends the first information by using the uplink control information (UCI), so that the terminal device can actively report the first information, to implement instant reporting of the currently occurring power control exception event, thereby rapidly and efficiently resolving a current uplink power exception, and enabling the terminal device to restore a normal uplink power as soon as possible.

In a possible implementation, before the sending first information to the network device, the method further includes:
adjusting the uplink power of the terminal device from the second power value to a third power value, where the third power value is greater than the second power value.

In this implementation, the uplink power of the terminal device is increased and the first information is then sent, to ensure that the first information can be effectively sent to the network device, thereby avoiding a case in which the terminal device cannot complete data sending due to an excessively low uplink power.

In a possible implementation, the sending first information to the network device includes:
in response to a first request message sent by the network device, sending a first response message to the network device, where the first response message includes the first information.

In this implementation, in response to a requirement of the network device, the terminal device sends the first information to the network device by using the first response message (for example, UIR), which can also effectively report the power control exception event to the network device.

In a possible implementation, after it is determined that the power control exception event occurs, the method further includes:
recording event information corresponding to the power control exception event, where the event information includes at least one of the following: the power drop value, a timestamp when the power control exception event is detected, location information of occurrence of the power control exception event, and cell information of occurrence of the power control exception event.

In a possible implementation, the sending first information to the network device includes:
when it is determined that the recorded event information of the power control exception event meets a reporting condition, sending the first information to the network device, where there is/are one or more recorded power control exception events; and
the first information is further used to indicate at least one piece of the following content: a power drop value corresponding to each power control exception event, a timestamp corresponding to each power control exception event, location information corresponding to each power control exception event, cell information corresponding to each power control exception event, and a frequency of the power control exception event occurring within first unit duration.

In this implementation, when the terminal device detects that the power control exception event occurs, the event information of the power control exception event is recorded, and the first information is generated based on the event information of the power control exception event, where the first information includes rich information content, which can provide the network device with rich data basis for information statistics of the power control exception event, thereby improving rationality and correctness of adjustment of the power configuration field performed by the network device subsequently.

In a possible implementation, the reporting condition includes at least one of the following: a frequency of the power control exception event occurring within second unit duration is higher than a preset frequency and a quantity of occurrences of the power control exception event within a preset time period is greater than a preset quantity.

In this implementation, because the reporting condition is set, the first information is sent when the event information of the power control exception event recorded by the terminal device meets the reporting condition, to ensure necessity to send the first information, thereby avoiding unnecessary burden caused to the network device.

In a possible implementation, after the sending first information to the network device, the method further includes:
receiving a power control instruction sent by the network device, where the power control instruction is used to instruct an increase in the uplink power of the terminal device.

In this implementation, the network device sends a power adjustment instruction to the terminal device to increase the uplink power of the terminal device, so as to restore the uplink power of the terminal device to a normal state as soon as possible, and avoid long-term impact on data transmission due to a low uplink power of the terminal device.

According to a second aspect, an embodiment of this application provides an uplink power control processing method, applied to a network device. The method includes:
sending a power configuration field to a terminal device, where the power configuration field is used to indicate to adjust an uplink power of the terminal device;
receiving first information sent by the terminal device, where the first information is used to indicate that a power control exception event occurs, and the power control exception event is determined based on a first power value before adjustment of the terminal device and a second power value after adjustment of the terminal device; and
adjusting a power configuration field of a target cell, where the target cell is a cell in which the power control exception event occurs.

In a possible implementation, if a power drop value is greater than or equal to a first preset threshold, the first information indicates the power control exception event, and the power drop value is a difference between the first power value and the second power value; or
if the second power value is less than a second preset threshold, the first information indicates the power control exception event.

In a possible implementation, the receiving first information sent by the terminal device includes:
receiving uplink control information sent by the terminal device, where the uplink control information includes the first information.

In a possible implementation, the receiving first information sent by the terminal device includes:
sending a first request message to the terminal device; and
receiving a first response message sent by the terminal device in response to the first request message, where the first response message includes the first information.

In a possible implementation, the first information is used to indicate at least one piece of the following content: a power drop value corresponding to at least one power control exception event, a timestamp corresponding to at least one power control exception event, location information corresponding to at least one power control exception event, cell information corresponding to at least one power control exception event, and a frequency of the power control exception event occurring within first unit duration.

In a possible implementation, after the receiving first information sent by the terminal device, the method further includes:
sending a power control instruction to the terminal device, where the power control instruction is used to instruct an increase in the uplink power of the terminal device.

According to a third aspect, an embodiment of this application provides an uplink power control processing apparatus. The apparatus includes:
a processing module, configured to: in response to a power configuration field sent by a network device, adjust an uplink power of the terminal device from a first power value to a second power value, where
the processing module is further configured to determine, based on the first power value and the second power value, whether a power control exception event occurs; and
a transceiver module, configured to: when it is determined that the power control exception event occurs, send first information to the network device to enable the network device to adjust a power configuration field of a target cell, where the first information is used to indicate that the power control exception event occurs, and the target cell is a cell in which the power control exception event occurs.

According to a fourth aspect, an embodiment of this application provides an uplink power control processing apparatus. The apparatus includes:
a transceiver module, configured to send a power configuration field to a terminal device, where the power configuration field is used to indicate to adjust an uplink power of the terminal device, and
the transceiver module is further configured to receive first information sent by the terminal device, where the first information is used to indicate that a power control exception event occurs, and the power control exception event is determined based on a first power value before adjustment of the terminal device and a second power value after adjustment of the terminal device; and
a processing module, configured to adjust a power configuration field of a target cell, where the target cell is a cell in which the power control exception event occurs.

According to a fifth aspect, an embodiment of this application provides a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device includes a processor and a memory. The memory stores computer-executable instructions. The processor executes the computer-executable instructions stored in the memory, to enable the terminal device to perform the method according to the first aspect.

According to a sixth aspect, an embodiment of this application provides a network device. The network device may be a base transceiver station (Base Transceiver Station, referred to as BTS for short) in a GSM system or a CDMA system, may be a NodeB (NodeB, referred to as NB for short) in a WCDMA system, may be an evolved NodeB (evolved NodeB, referred to as eNB for short), an access point (access point, AP), or a relay station in an LTE system, may be a base station in a 5G system, or the like.

The network device includes: a processor and a memory. The memory stores computer-executable instructions. The processor executes the computer-executable instructions stored in the memory, to enable the terminal device to perform the method according to the second aspect.

According to a seventh aspect, an embodiment of this application provides a computer-readable storage medium, and the computer-readable storage medium stores a computer program. When the computer program is executed by a processor, the methods according to the first aspect and the second aspect are implemented.

According to an eighth aspect, an embodiment of this application provides a computer program product. The computer program product includes a computer program. The computer program, when runs, enables a computer to perform the methods according to the first aspect and the second aspect.

According to a ninth aspect, an embodiment of this application provides a chip. The chip includes a processor. The processor is configured to invoke a computer program in a memory to perform the methods according to the first aspect and the second aspect.

It should be understood that the second aspect to the ninth aspect of this application correspond to the technical solutions of the first aspect of this application, and the beneficial effects achieved by each aspect and the corresponding feasible implementations are similar. Details are not described again.

### BRIEF DESCRIPTION OF DRAWINGS

FIG. 1 is a schematic flowchart of 4-step RACH according to an embodiment of this application;
FIG. 2 is a schematic diagram of a communication scenario according to an embodiment of this application;
FIG. 3 is a diagram of signaling interaction of an uplink power control processing method according to an embodiment of this application;
FIG. 4 is a schematic diagram 1 of interaction of first information according to an embodiment of this application;
FIG. 5 is a schematic diagram 2 of interaction of first information according to an embodiment of this application;
FIG. 6 is a schematic diagram 1 of a structure of an uplink power control processing apparatus according to an embodiment of this application;
FIG. 7 is a schematic diagram 2 of a structure of an uplink power control processing apparatus according to an embodiment of this application;
FIG. 8 is a schematic diagram of a structure of a terminal device according to an embodiment of this application; and
FIG. 9 is a schematic diagram of a structure of a network device according to an embodiment of this application.

### DESCRIPTION OF EMBODIMENTS

To clearly describe the technical solutions in the embodiments of this application, the following briefly describes some terms and technologies in the embodiments of this application.

### 1. Terminal device

The terminal device may be a device that includes a wireless transceiving function and may cooperate with a network device to provide a communication service for a user. Specifically, the terminal device may refer to user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. For example, the terminal device may be a cellular phone, a cordless telephone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an in-vehicle device, a wearable device, or a terminal device in a future 5G network or a network after 5G. 5G refers to a 5th generation mobile communication technology (5th Generation Mobile Communication Technology), 5G for short.

### 2. Network device

The network device may be a device configured to communicate with a terminal device, which, for example, may be a base transceiver station (Base Transceiver Station, BTS) in a global system for mobile communication (Global System for Mobile Communication, GSM) or code division multiple access (Code Division Multiple Access, CDMA) communication system, may be a NodeB (NodeB, NB) in a wideband code division multiple access (Wideband Code Division Multiple Access, WCDMA) system, may be an evolved NodeB (Evolutional Node B, eNB, or eNodeB) in an LTE system. Alternatively, the network device may be a relay station, an access point, an in-vehicle device, a wearable device, a network side device in a future 5G network or a network after 5G, a network device in a future evolved public land mobile network (Public Land Mobile Network, PLMN) network, or the like.

The network device in the embodiments of this application may also be referred to as a network device or a radio access network (Radio Access Network, RAN) device. The RAN device is connected to the terminal device, and is configured to receive data of the terminal device and send the data to a core network device. The RAN device corresponds to different devices in different communication systems, for example, corresponds to a base station and a base station controller in a 2G system, corresponds to a base station and a radio network controller (Radio Network Controller, RNC) in a 3G system, corresponds to an evolved NodeB (Evolutional Node B, eNB) in a 4G system, and corresponds to a 5G system in a 5G system, for example, an access network device (for example, a gNB, a central unit CU, or a distributed unit DU) in new radio (New Radio, NR).

### 3. Random access process

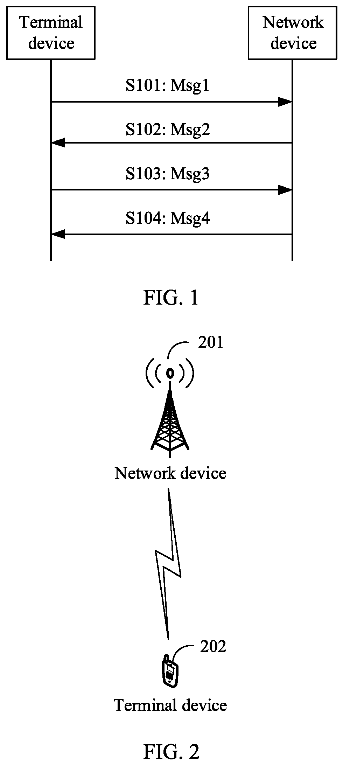

Random access in the embodiments of this application may include four-step random access (also referred to as four-step random access channel, or simply 4-step RACH) and two-step random access (also referred to as two-step random access channel, or simply 2-step RACH). For ease of understanding, a process of 4-step RACH is described in detail below with reference to FIG. 1. RACH is a random access channel (Random Access Channel).

FIG. 1 is a schematic flowchart of 4-step RACH according to an embodiment of this application. Referring to FIG. 1, a process may include the following steps.

S101: A terminal device sends a Msg1 to a network device.

The Msg1 may also be referred to as a msg1 or a MSG1. Msg1 is used to transmit a random access preamble, where the random access preamble may also be referred to as a random access preamble sequence, a preamble, or a preamble sequence.

In this embodiment of this application, a time-frequency resource occupied by the preamble and for sending the preamble is referred to as a physical random access channel (physical random access channel, PRACH) resource.

Optionally, the terminal device may select a PRACH resource and a preamble, and send the selected preamble on the selected PRACH resource. If a random access manner is contention-free random access, a base station may designate the PRACH resource and the preamble, and the base station may estimate, based on the preamble sent by the terminal device, a timing advance (timing advance, TA) amount and an uplink grant size required for the terminal device to transmit a Msg3.

For example, the network device may broadcast an available PRACH resource by using system information.

S102: The network device sends a Msg2 to the terminal device.

The Msg2 may also be referred to as a msg2 or a MSG2. The Msg2 includes a time-frequency resource determined by the network device for the terminal device to use for sending a payload (payload).

After the terminal device sends the Msg1, a random access response time window (ra-Response window) may be enabled. A physical downlink control channel (physical downlink control channel, PDC) scrambled by a random access radio network temporary identifier (random access radio network temporary identifier, RA-RNTI) is monitored in the random access response time window.

The RA-RNTI is related to the PRACH time-frequency resource used by the terminal device to send the Msg1.

After the terminal device successfully receives the PDCCH scrambled by the RA-RNTI, the terminal device can obtain a physical downlink shared channel (physical downlink shared channel, PDSCH) scheduled by the PDCCH, which includes a random access response (random access response, RAR). Th RAR may include the following information:

A subheader of the RAR includes a back-off indicator (back-off indicator, BI), which is used to indicate a back-off time for retransmitting the Msg1.

A RAPID in the RAR: A received preamble index for a response of a network.

A payload (payload) of the RAR includes a timing advance group (timing advance group, TAG), which is used to adjust uplink timing.

Uplink (up link, UL) grant: An uplink resource indication used to schedule the Msg3.

Temporary (temporary) cell radio network temporary identifier (cell radio network temporary identifier, C-RNTI): used to scramble a PDCCH of a Msg4.

If the terminal receives the PDCCH scrambled by the RAR-RNTI, and the RAR includes the preamble index sent by the RAR, the terminal considers that the random access response is successfully received.

For contention-free random access, after the terminal successfully receives the Msg2, a random access process ends. For contention random access, after the terminal device successfully receives the Msg2, the Msg3 and the Msg4 further need to be continuously transmitted.

S103: The terminal device sends a Msg3 to the network device.

The Msg3 may also be referred to as a msg3 or a MSG3. The Msg3 is a first scheduled transmission in the random access process, for sending the payload (payload), for example, an RRC connection request message or a tracking area update message.

The Msg3 can inform the network device what event triggered the RACH process. For example, if the RACH process is an initial access random process, the Msg3 carries a UE ID and an establishment cause; or if the RACH process is RRC re-establishment, the Msg3 carries a connected-state UE identifier and an establishment cause.

It should be noted that if different terminal devices select a same preamble in S101 and send the preamble on a same time-frequency resource, the different terminal devices send payloads on the same time-frequency resource, resulting in a resource usage conflict.

S104: The network device sends a Msg4 to the terminal device.

The Msg4 may also be referred to as a msg4 or a MSG4. The Msg4 is used to indicate whether the terminal device has successfully accessed the network device.

The Msg4 may have the following two functions: One is to resolve a contention conflict. The other one is to enable the network device to transmit an RRC configuration message to the terminal device. There are two manners to resolve the contention conflict: In one manner, if the terminal device carries the C-RNTI in the Msg3, the Msg4 is scheduled by the PDCCH scrambled by the C-RNTI. In the other manner, if the terminal device does not carry the C-RNTI in the Msg3, for example, in a case of initial access, the Msg4 is scheduled by a PDCCH scrambled by a TC-RNTI, and the terminal device receives a PDSCH in the Msg4, and matches the Msg3 with a common control channel (common control channel, CCCH) service data unit (SDU) in the PDSCH, to resolve the conflict.

### 4. Other terms

In the embodiments of this application, words such as "first" and "second" are used to distinguish between same items or similar items with basically same functions and effects. For example, a first chip and a second chip are merely used to distinguish between different chips, and are not intended to limit a sequence of the first chip and the second chip. A person skilled in the art may understand that the words such as "first" and "second" do not limit a quantity or an execution order, and the words such as "first" and "second" do not define a definite difference.

It should be noted that words such as "example" or "for example" in the embodiments of this application are used to represent giving an example, an illustration, or a description. Any embodiment or design solution described as an "example" or "for example" in this application should not be explained as being more preferred or having more advantages than other embodiments or design solutions. Exactly, use of the words such as "example" or "for example" is intended to present a related concept in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may indicate a, b, c, a-b, a-c, b-c, or a-b-c, where a, b, and c may be singular or plural.

To better understand the technical solutions of this application, based on the concepts described above, related technologies included in this application are further described below in detail.

Referring to FIG. 2 first, the following first describes a communication scenario in which an uplink power control processing method in this application is applicable.

FIG. 2 is a schematic diagram of a communication scenario according to an embodiment of this application. Referring to FIG. 2, a network device 201 and a terminal device 202 are included. The network device 201 and the terminal device 202 may perform wireless communication with each other. The terminal device 202 may communicate with at least one core network by using a radio access network (Radio Access Network, RAN).

A communication system may be a global system of mobile communication (Global System of Mobile communication, referred to as GSM for short), a code division multiple access (Code Division Multiple Access, referred to as CDMA for short) system, a wideband code division multiple access (Wideband Code Division Multiple Access, referred to as WCDMA for short) system, a long term evolution (Long Term XR VR AR Evolution, referred to as LTE for short) system, or a fifth generation mobile communication (5th-Generation, referred to as 5G for short) system.

Correspondingly, the network device may be a base transceiver station (Base Transceiver Station, referred to as BTS for short) in a GSM system or a CDMA system, may be a NodeB (NodeB, referred to as NB for short) in a WCDMA system, may be an evolved NodeB (evolved NodeB, referred to as eNB for short), an access point (access point, AP), or a relay station in an LTE system, may be a base station in a 5G system, or the like.

The 5G mobile communication system in this application includes a non-standalone (non-standalone, NSA) 5G mobile communication system and/or a standalone (standalone, SA) 5G mobile communication system. Technical solutions provided in this application are also applicable to a future communication system, for example, a sixth generation mobile communication system. The communication system may alternatively be a PLMN network, a device-to-device (device-to-device, D2D) network, a machine to machine (machine to machine, M2M) network, an IoT network, or another network.

It may be understood that if the technical solutions in the embodiments of this application are applied to another wireless communication network, a corresponding name may be replaced with a name of a corresponding function in the another wireless communication network.

The network architecture and service scenario described in the embodiments of this application are intended to describe the technical solutions in the embodiments of this application more clearly, and do not constitute limitations on the technical solutions provided in the embodiments of this application. A person of ordinary skill in the art can learn that with evolution of network architectures and emergence of new service scenarios, the technical solutions provided in the embodiments of this application are also applicable to a similar technical problem.

Based on the communication scenario introduced above, a terminal device usually needs to set up a connection with a network device to complete corresponding data interaction.

When the terminal device sets up the connection with the network device, if a distance between the terminal device and the network device is relatively small, and a path loss experienced by a signal is relatively small, the terminal device can set up communication with the network device with a relatively small transmit power. On the contrary, if a distance between the terminal device and the network device is relatively large, and a path loss experienced by a signal is relatively large, the terminal device needs to set up communication with the network device with a relatively large transmit power.

To compensate for transmission losses on different paths and maintain a stable receive power of the network device, a transmit power of an uplink control channel (Physical Uplink Control Channel, PUCCH) between the terminal device and the network device needs to be controlled. The transmit power of the PUCCH may also be referred to as uplink power, and controlling the transmit power of the PUCCH may be simply referred to as uplink power control.

The following describes an implementation of uplink power control. In a random access process between the terminal device and the network device, the terminal device may continuously adjust a transmit power of a PRACH based on a reference signal receiving power (Reference Signal Receiving Power, RSRP) of a current environment, until random access succeeds.

For example, when the RSRP of the current environment is relatively low, the terminal device may continuously increase the transmit power of the PRACH, so that the network device can successfully receive a message sent by the terminal device through the PRACH.

Specifically, during each time of random access, the terminal device may gradually ramp up the transmit power of the PRACH based on a power ramping step (for example, denoted as power Ramping Step) configured in a SIB1 (System Information Block 1, system information block 1) sent by the network device, that is, after each time of random access fails, the transmit power of the PRACH is ramped up by one power ramping step for retransmission, until random access of the terminal device to the network device succeeds.

After random access of the terminal device to the network device succeeds, a transmit power ramp-up amplitude (for example, denoted as PowerRamp-up) of the PRACH may be determined based on a quantity of retransmissions of the terminal device and the power Ramping Step, where the transmit power ramp-up amplitude of the PRACH may be understood as a total adjustment amount of the transmit power of the PRACH in the random access process between the terminal device and the network device. That is, PowerRamp-up=N×powerRampingStep, where N is a quantity of retransmissions of the PRACH of the terminal device in the random access process. In this embodiment, the transmit power ramp-up amplitude of the PRACH may also be simply referred to as a power ramp-up amplitude.

In an implementation, when the transmit power of the PUCCH is calculated subsequently, the power ramp-up amplitude of the PRACH in the random access process may be used as a transmit power adjustment value to determine the transmit power of the PUCCH. However, if the network device configures a power configuration field (for example, p0-PUCCH-Value) corresponding to the PUCCH in an RRC Setup (RRC setup) message, the power ramp-up amplitude in the random access process may be reset to 0.

When the power ramp-up amplitude is reset to 0, a sudden drop may be caused in the transmit power of the PUCCH, for example, the transmit power of the PUCCH may be dropped to -12 from 22.5. The sudden drop in the transmit power of the PUCCH may cause information carried by the PUCCH to fail to be sent. The information carried by the PUCCH may include, for example, an SR (Scheduling request, scheduling request). The failure to send the information carried by the PUCCH may further lead to uplink data transmission congestion, causing system stuttering or even disconnection.

These problems described above may be uniformly understood as uplink power control exceptions of the terminal device. Currently, there is no effective solution for the uplink power control exceptions described above in related technologies.

For shortcomings of current technologies in processing uplink power control exceptions, this application proposes the following technical concept: When a terminal device determines that a power configuration field is configured in an RRC Setup message, an uplink power may be monitored. When the terminal device determines that the uplink power suddenly drops, a current exception situation may be reported to a network device, so that the network device can adjust uplink power control of the terminal device, thereby resolving an uplink power control exception problem of the terminal device.

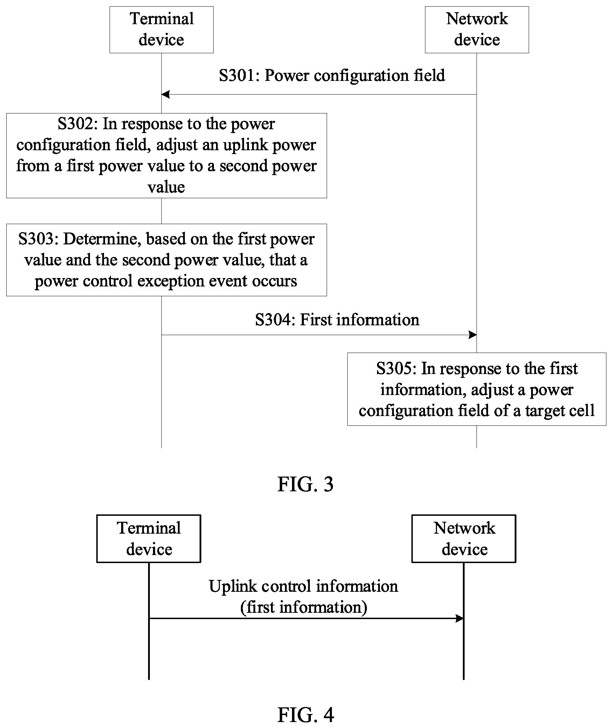

Based on the foregoing descriptions, the following describes in detail an uplink power control processing method provided in this application with reference to specific embodiments. First, description is provided with reference to FIG. 3. FIG. 3 is a diagram of signaling interaction of an uplink power control processing method according to an embodiment of this application.

As shown in FIG. 3, the method includes the following steps.

S301: A network device sends a power configuration field to a terminal device.

In an implementation, the network device may send an RRC Setup message to the terminal device, where the RRC Setup message includes the power configuration field.

Herein, the implementation of sending the RRC Setup message by the network device is simply described. It may be understood based on the random access process described above that the terminal device may send a random access preamble through a PRACH channel, and the network device may allocate an uplink resource to the terminal device after receiving the random access preamble. Then, the terminal device may send an RRC connection request (RRC Connection Request) message through a physical uplink shared channel (Physical Uplink Shared Channel, PUSCH) to set up an RRC connection.

The network device may send the RRC Setup (Setup) message to the terminal device after obtaining the RRC Connection Request message, and may configure a transmit power of the PUCCH in the RRC Setup message based on a communication protocol between the network device and the terminal device, so that the terminal device can determine the transmit power of the PUCCH based on a configuration in RRC Setup. Correspondingly, in this embodiment, that is, the RRC Setup message includes the power configuration field, where the power configuration field may be p0-PUCCH-Value described above.

In this embodiment, the power configuration field is used to indicate the terminal device to adjust an uplink power of the terminal device. In one hand, it can be determined based on the foregoing description that when the RRC Setup message includes the power configuration field, a power ramp-up amplitude in the random access process may be reset to 0, and correspondingly, the uplink power of the terminal device is adjusted. On the other hand, the power configuration field p0-PUCCH-Value may also indicate a power adjustment value of the transmit power (that is, the uplink power in this embodiment) of the PUCCH, for example, a larger value of p0-PUCCH-Value correspondingly indicates a larger power adjustment value of the uplink power, that is, a ramp-up degree of the uplink power is larger.

S302: In response to the power configuration field, the terminal device adjusts an uplink power of the terminal device from a first power value to a second power value.

After receiving the power configuration field from the network device, the terminal device may adjust the uplink power of the terminal device based on the power configuration field.

The terminal device may adjust, in response to the power configuration field, the uplink power of the terminal device from the first power value to the second power value. In this embodiment, the first power value and the second power value are not fixed power values, where the first power value is an uplink power of the terminal device before power adjustment is performed based on the power configuration field, which depends on a transmit power situation occurring when the terminal device receives the power configuration field. In addition, the second power value is an uplink power of the terminal device after power adjustment is performed based on the power configuration field, which depends on an indication situation of the power configuration field.

Therefore, in the description of the current embodiment, that the terminal device adjusts the uplink power from a first power value to a second power value is not adjusting the uplink power from one specific value to another specific value. The uplink powers before and after adjustment depends on an actual implementation, and this embodiment does not limit specific values of the first power value and the second power value.

S303: The terminal device determines, based on the first power value and the second power value, that a power control exception event occurs.

After adjusting the uplink power in response to the power configuration field, the terminal device may determine, based on an adjustment situation of the uplink power, whether the power control exception event occurs.

In an implementation, the terminal device may determine a difference between the first power value and the second power value, to obtain a power drop value. Then, the power drop value is compared with a first preset threshold to determine whether the power control exception event occurs.

For example, when the power drop value is greater than or equal to the first preset threshold, it can be determined that the uplink power of the terminal device suddenly drops, and therefore it can be determined that the power control exception event occurs. On the contrary, when the power drop value is less than the first preset threshold, it can be determined that although the uplink power of the terminal device is adjusted, there is no sudden drop. Therefore, it can be tentatively determined that the power control exception event does not occur.

The first preset threshold is a threshold used to determine whether the uplink power suddenly drops. For example, the first preset threshold may be, for example, 10 db. A specific value of the first preset threshold is not particularly limited in this embodiment, and may be set according to an actual requirement.

In another implementation, the terminal device may alternatively compare the second power value obtained after adjustment with a second preset threshold, to determine whether the power control exception event occurs.

For example, when the second power value is less than the second preset threshold, it can be determined that the uplink power of the terminal device obtained after adjustment is excessively low, and therefore it can be determined that the power control exception event occurs. On the contrary, when the second power value is greater than or equal to the second preset threshold, it can be determined that although the uplink power of the terminal device is adjusted, there is no excessively low power, and therefore it can be tentatively determined that the power control exception event does not occur.

The second preset threshold is a threshold used to determine whether the uplink power obtained after adjustment is excessively low. For example, the first preset threshold may be, for example, -10 db. A specific value of the second preset threshold is not particularly limited in this embodiment, and may be set according to an actual requirement.

In an actual implementation process, a specific manner for determining whether the power control exception event occurs may be selected based on an actual requirement, for example, the foregoing two implementations may be combined, which means that it can be determined, only when the two conditions described above are met, that the power control exception event occurs. The power control exception event in this embodiment may be understood as an event that an exception situation occurs in uplink power control of the terminal device. Based on this, a manner for determining the power control exception event may be arbitrarily extended according to an actual requirement.

S304: The terminal device sends first information to the network device.

When the terminal device determines that the power control exception event occurs, the terminal device may send the first information to the network device, where the first information is used to indicate the terminal device that the power control exception event occurs, so that the network device can collect the power control exception event.

In an implementation, the first information may indicate only the terminal device that the power control exception event occurs or the first information may indicate that the power control exception event occurs in the terminal device due to the power configuration field. In the later implementation, in addition to informing the network device that the power control exception event occurs, the network device may further learn of a reason why the power control exception event occurs is improper configuration of the power configuration field, thereby improving efficiency of exception processing.

S305: In response to the first information, the network device adjusts a power configuration field of a target cell.

Then, the network device may determine, based on the first information, that the power control exception event occurs, and the network device may adjust, based on the collected power control exception event, the power configuration field of the target cell in which the power control exception event occurs, to prevent uplink power control of the terminal device from the exception described above.

Adjustment of the power configuration field of the network device may be setting the RRC Setup message to not include the power configuration field, to prevent the uplink power of the terminal device from suddenly dropping or preventing the second power value obtained after adjustment from being excessively low. Alternatively, the RRC Setup message may be set to include the power configuration field, but a value of the power configuration field is large, to prevent the uplink power of the terminal device from suddenly dropping or prevent the second power value obtained after adjustment from being excessively low, thereby avoiding the uplink power control exception in the terminal device.

In the uplink power control processing method and apparatus provided in the embodiments of this application, after the terminal device adjusts the uplink power based on the power configuration field sent by the network device, whether the power control exception event occurs is determined based on the uplink powers before and after adjustment. When determining that the power control exception event occurs, the terminal device may report occurrence of the power control exception event to the network device by using the first information, so that the network device can adjust the power configuration field of the target cell in which the power control exception event occurs, thereby resolving an uplink power control exception problem in a targeted manner, avoiding a sudden drop in the uplink power of the terminal device, and improving stability and rationality of uplink power control.

Based on the content described above, there may be, for example, the following two implementations for sending the first information to the network device by the terminal device: A first implementation is that the terminal device may actively send the first information to the network device; and the second implementation is that the terminal device passively sends the first information to the network device in response to a requirement of the network device.

The following separately describes in detail the two implementations for sending the first information to the network device by the terminal device and related solution implementations.

The first implementation: The terminal device actively sends the first information to the network device.

Referring to FIG. 4 for understanding, FIG. 4 is a schematic diagram 1 of interaction of first information according to an embodiment of this application.

Referring to FIG. 4, in this implementation, for example, after detecting the power control exception event, the terminal device may send uplink control information (Uplink Control Information, UCI) to the network device, where the uplink control information may include the first information described above.

For example, an information element may be newly defined in the UCI, and the first information may be carried in the newly defined information element to report the power control exception event. Alternatively, an information element already existing in the UCI may be multiplexed to carry the first information, to report the power control exception event. The information element carrying the first information in the UCI is not particularly limited in this embodiment, and may be set according to an actual requirement, provided that the first information can be sent to the network device by using the UCI.

In an expandable implementation, the terminal device can also send the first information by using another uplink message, provided that the uplink message can be actively sent by the terminal device. This embodiment does not limit a specific implementation of the uplink message for sending the first information.

In this case, it may be understood that in this implementation in which the terminal device actively reports, the terminal device determines a time point to send the first information. In an implementation, the terminal device may immediately send the first information to the network device after determining that the power control exception event occurs, to report this time of power control exception event to the network device in a timely manner, so that the network device can rapidly process this time of power control exception event of the terminal device.

In addition, to ensure that the first information can be sent to the network device as soon as possible, the first information may be set to be used for only indicating the power control exception event (or the power control exception event caused by the power configuration field), to increase a speed of generating the first information, thereby ensuring timeliness of the first information sent to network device for indicating the power control exception event.

Alternatively, the first information may include some other simple information, for example, cell information of the terminal device and location information of the terminal device, so that the network device can collect richer relate information of the power control exception event. In an actual implementation process, specific content included in the first information may be set according to an actual requirement, provided that the first information can be reported to the network device in a timely manner when the power control exception event occurs.

However, the uplink power of the terminal device is the second power value described above when it is determined that the power control exception event occurs, where the second power value obtained after adjustment is relatively small. Then, to ensure that the terminal device can effectively send the first information to the network device, the terminal device may further adjust the uplink power of the terminal device from the second power value to a third power value before sending the first information, where the third power value is greater than the second power value.

In an implementation, the third power value may be equal to, for example, the first power value, that is, before the first information is sent, the uplink power of the terminal device may be restored to a power value before adjustment, to ensure that the first information can be effectively sent to the network device.

Alternatively, the third power value may be another value, provided that the third power value is greater than the second power value. In an actual implementation process, for example, a fixed third power value may be preset, to adjust the uplink power of the terminal device to the third power value as a fixed value. Alternatively, a power increase value may be preset, and the third power value is a sum of the second power value and the power increase value. A specific value of the third power value is not limited in this embodiment.

If the first information can be successfully reported to the network device, after receiving the first information, the network device may send a power control instruction to the terminal device, where the power control instruction is used to instruct to increase the uplink power of the terminal device, to resolve the power control exception currently occurring in the terminal device, so that the terminal device can restore, as soon as possible, to an uplink power that allows normal data transceiving, thereby preventing data transmission from being affected.

The power control instruction may instruct, for example, to increase the uplink power of the terminal device by a first value, or to increase the uplink power of the terminal device to a second value, where the first value and the second value may be pre-agreed or may be dynamically instructed by the power control instruction. Alternatively, the power control instruction may instruct a new power configuration field, so that the terminal device determines the uplink power of the terminal device based on the new power configuration field, thereby increasing the uplink power of the terminal device. A specific instruction manner of the power control instruction is not particularly limited in this embodiment, provided that the power control instruction can be used to instruct to increase the uplink power of the terminal device.

The following further describes another sending manner of the first information.

The second implementation: The terminal device passively sends the first information to the network device in response to a requirement of the network device.

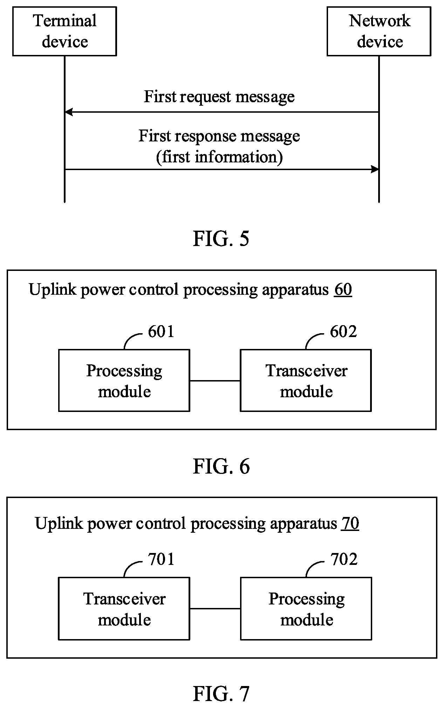

Referring to FIG. 5 for understanding, FIG. 5 is a schematic diagram 2 of interaction of first information according to an embodiment of this application.

Referring to FIG. 5, in this implementation, the network device may send a first request message to the terminal device, where the first request message may be, for example, a UE Information Request (UE information request message), and the first request message is used to indicate the terminal device to report corresponding data.

Then, the terminal device may send a first response message to the network device in response to the first request message, where the first response message may be, for example, UE Information Response (UE information response message, UIR for short), and the first response message is used to report corresponding data to the network device.

In an implementation, the first response message may be set to include the first information, so that the terminal device sends the first information to the network device.

In addition, in the implementation in which the terminal device passively sends the first information, implementations of the first request message and the first response message are not limited to the foregoing two types of information, provided that the first request message is sent by the network device to indicate the terminal device to report corresponding data, and provided that the first response message is sent by the terminal device in response to the first request message to report corresponding data of the terminal device. Implementations of the first request message and the first response message are not limited in this embodiment.

In addition, it may be understood that in the implementation in which the terminal device passively sends the first information, the time point for sending the first information cannot be determined by the terminal device, but depends on when the network device sends the first request message to the terminal device. It is possible that the network device sends the first request message to the terminal device only after a period of time has passed since the power control exception event occurred in the terminal device, and only then the terminal device can send the first information to the network device in response to the requirement of the network device.

Therefore, in the current implementation, an objective of the terminal device sending the first information to the network device is usually not to immediately resolve the power control exception event occurring in the terminal device, but to uniformly report power control exception events within a specific period of time to the network device, so that the network device can clearly understand a detailed situation of the power control exception events that occur on the terminal device.

It may be understood with reference to the foregoing description that the implementation in which the terminal device passively sends the first information actually does not require the terminal device to rapidly generate the first information. Therefore, the first information may be set to include rich feedback content, to provide the network device with richer information related to the power control exception event.

In an implementation, after the power control exception event occurs, the terminal device may record event information corresponding to the power control exception event. Because the power control exception event may occur on the terminal device for a plurality of times, for example, one piece of event information may be recorded for each time of power control exception event. The event information may include at least one of the following: the power drop value corresponding to the power control exception event, a timestamp when the power control exception event is detected, location information of occurrence of the power control exception event, and cell information of occurrence of the power control exception event.

The location information may be, for example, location information of the terminal device on which the power control exception event occurs, and the location information may be, for example, in a form of longitude and latitude, or in a form of coordinates. This is not limited in this embodiment. In addition, the cell information may be, for example, related information of a cell in which the terminal device on which the power control exception event occurs is located, for example, may include an identifier, a location, a cell parameter, and the like of the cell. Information related to the cell in which the power control exception event occurs may be used as cell information in this embodiment.

In addition, in an actual implementation process, specific content included in the event information may further be expanded according to an actual requirement. This is not limited in this embodiment.

After the terminal device records the event information of the power control exception event, if the first request message sent by the network device is received, the terminal device may generate the first information based on the recorded event information of the power control exception event, and sends the first response message to the network device and sends the first information to the network device.

In an implementation, the first information may implement indication for at least one power control exception event recorded by the terminal device, where in addition to indicating that the power control exception event occurs on the terminal device, the first information may further indicate, for example, at least one piece of the following content: a power drop value corresponding to each power control exception event, a timestamp corresponding to each power control exception event, location information corresponding to each power control exception event, cell information corresponding to each power control exception event, and a frequency of the power control exception event occurring within first unit duration.

The first unit duration may be, for example, one hour, or may be one day. Specific duration of the first unit duration is not particularly limited in this embodiment. For example, the first unit duration is one hour. A frequency of the power control exception event occurring within second unit duration may be that, for example, the power control exception event occurs five times within one hour.

In addition, when the frequency of the power control exception event occurring within the first unit duration is determined, for example, an average frequency of the power control exception event occurring within the first unit duration is counted based on the event information of the power control exception event recorded by the terminal device, and the frequency may be reported to the network device. Alternatively, a maximum frequency of the power control exception event occurring within the first unit duration may be counted based on a plurality of pieces of event information recorded by the terminal device, and the frequency is reported to the network device.

More further, when the first information is sent by using the first response message, for example, an information element may be newly added to the first response message, to carry the first information by using the newly added information element. Alternatively, an information element already existing in the first response message may be multiplexed to carry the first information. This is not limited in this embodiment.

For the implementation in which the first information is carried by the newly added information element, for example, it is assumed that the first response message is the UE Information Response, and the UE Information Response includes an rlf-Cause-r16 field, where rlf is a radio link failure (Radio Link Failure).

The rlf-Cause-r16 field includes a plurality of enumeration values. For example, a new value may be added to the plurality of enumeration values of rlf-Cause-r16. It is assumed that the newly added value is referred to as p0-PUCCH-ValueMisconfiguration. The new value p0-PUCCH-ValueMisconfiguration may be understood as the newly added information element, which is used to carry the first information.

For example, there is one power exception event. The newly added information element p0-PUCCH-ValueMisconfiguration may include at least one piece of the following content:
UnsuitableP0-PUCCH-Value, where the parameter is used to record a power exception event caused by p0-PUCCH-Value incorrectly configured by the network device;
PowerDropLevel, where the parameter is used to record a specific power drop value, that is, the foregoing power drop value;
EventTimestamp, where the parameter is used to record the timestamp when the power exception event is detected; and
EventFrequency, where the parameter is used to record the frequency of the power exception event occurring within the first unit duration (for example, each hour).

In addition, the newly added information element may further include the location information and the cell information that correspond to the power control exception event. Details are not described herein.

It can be determined with reference to the foregoing description that the related information of the power exception event can be reported to the network device by adding the information element to the first response message to carry the first information.

In addition, based on the foregoing content, in an implementation, when the terminal device records the event information of the power exception event, for example, the newly added information element described above may be activated, to record the event information of the power exception event by using a related parameter in the newly added information element. In this implementation, it may be understood that the first information sent by the terminal device and the event information recorded by the terminal device are actually the same information. The terminal device records the event information by activating the newly added information element, which is actually generating the first information.

Then, when the first information needs to be sent, the terminal device may directly determine, as the information element carrying the first information, the newly added information element in which the related event information is already recorded, and then send the first information to the network device.

In addition, after receiving the first request message sent by the network device, the terminal device may directly send the first response message to the network device in response to the first request message, and send the first information to the network device by using the first response message. Alternatively, before sending the first response message to the network device, the terminal device first determines whether the currently recorded event information of the at least one power control exception event meets a reporting condition, and sends the first information to the network device when the reporting condition is determined.

The reporting condition is set to improve correctness and necessity of the power exception event reported to the network device, to avoid reporting the related information of the power exception event to the network device when unnecessary, which causes the network device to bear unnecessary analysis and processing work.

The reporting condition may include, for example, at least one of the following: a frequency of the power control exception event occurring within second unit duration is higher than a preset frequency and a quantity of occurrences of the power control exception event within a preset time period is greater than a preset quantity.

The second unit duration is similar to the first unit duration, for example, may be one hour or one day. This is not limited in this embodiment. For example, the second unit duration is one hour. A frequency of the power control exception event occurring within the second unit duration may be that, for example, the power control exception event occurs three times within one hour. Similar to the above description, the preset frequency herein may be an average frequency, or a maximum frequency. This is not limited in this embodiment.

In addition, a preset time period may be, for example, a time period corresponding to specific duration before the current moment, for example, 12 hours before the current moment or 24 hours before the current moment. For example, the preset time period is 12 hours. A quantity of occurrences of the power control exception event within the preset time period may be that, for example, the power control exception event occurs eight times within last 12 hours. In an actual implementation process, specific selection of the preset time period may be selected and set according to an actual requirement. This is not limited in this embodiment.

In addition, the preset frequency and preset quantity described above are threshold parameters used to determine whether to report the first information, and may be arbitrarily set according to an actual requirement. For example, the preset frequency may be set to 5 times, and the preset quantity may be set to 10 times. These are not particularly limited in this embodiment.

For the implementation in which the terminal device passively sends the first information, although the objective of the terminal device sending the first information is not resolving the power exception event currently occurring, the network device may still try to adjust an uplink frequency of the terminal device, to resolve the power exception event of the terminal device as much as possible.

Therefore, after receiving the first information, the network device may send a power control instruction to the terminal device, where the power control instruction is used to instruct to increase the uplink power of the terminal device, and the power control instruction is the same as that described in the foregoing embodiment. Details are not described herein again.

In summary, in the implementation in which the terminal device, in response to the requirement of the network device, passively sends the first information to the network device, the related information of the power exception event recorded within a period of time may be fed back to the network device, to provide the network device with rich feedback content of the power exception event, so that the network device collects information about the power exception event, thereby making targeted adjustment, and improving rationality and correctness of subsequent uplink power control.

The foregoing describes two implementations of sending the first information by the terminal device. However, it may be understood that the foregoing two implementations may actually coexist.

To be specific, the terminal device can actively send the first information to the network device when the power control exception event occurs, to send the first information indicating the power control exception event to the network device instantly and rapidly, so that the network device can adjust the uplink power of the terminal device in real time, thereby eliminating an uplink power control exception state of the terminal device as soon as possible. It may be understood that this operation can, from a micro perspective, achieve prompt processing of a power control exception event of an individual terminal device.

In addition, the terminal device may also passively send the first information to the network device by using the first response message when receiving the first request message of the network device, to uniformly report the event information of a plurality of power exception events recorded within a period of time by the terminal device to the network device, so that the network device collects the event information of the power control exception events, thereby performing targeted adjustment on the power configuration field of the target cell related to the power control exception event. This operation can, from a macro perspective, enhance rationality and correctness of subsequent uplink power control for a plurality of terminal devices by the network device.

In addition, based on the foregoing content, an action of the network device adjusting the power configuration field of the target cell and an action of the network device sending the power control instruction to the terminal device further need to be distinguished.

The network device sends the power control instruction to the terminal device to adjust a current uplink power of the terminal device, to try to correct the power control exception event caused by the incorrectly configured power configuration field, so that the terminal device restores to the normal uplink power as soon as possible.

However, adjustment of the configuration field of the target cell by the network device is usually not used to process a specific power exception event of a specific terminal device, but is used to optimize uplink power control processing of the network device, thereby improving rationality and correctness of uplink power control of the terminal device by the network device. For example, adjustment of the power configuration field of the target cell by the network device usually lags behind the power control exception event reported by the terminal device.

For example, it is assumed that the network device receives first information sent by a terminal device 1 at a moment a and receives first information sent by a terminal device 2 at a moment b, and then the network device counts related information of power control exception events of target cells respectively corresponding to the two terminal devices based on the first information sent by the two terminal devices (may further include another terminal device). Then, power configuration fields of the target cells are adjusted based on a count result.

Then, for example, the network device sends adjusted power configuration fields to a terminal device 3 (for example, belonging to a specific target cell) at a moment c, to avoid a sudden drop in an uplink power of the terminal device 3. In addition, the network device subsequently performs uplink power control based on the adjusted power configuration fields for another terminal device in the target cell, thereby improving overall rationality of uplink power control of the terminal device by the network device.

In an implementation, based on first information sent by a plurality of terminal devices, the network device may identify, for example, modes and ranges of power control exception events, and make targeted adjustment on power configuration fields based on the identified modes and ranges. For example, it is assumed that the identified mode and range of the power exception event are as follows: The power control exception event occurs at a high frequency in a cell 1 in a time period d. Then, the network device may increase a power configuration field of the cell 1 within the time period d to avoid the power control exception event.

In an actual implementation process, how the network device specifically classifies the modes and the ranges of the power exception events and sets a corresponding adjustment policy in a targeted manner based on an identification result depends on an actual implementation of the network device. This is not limited in this embodiment, provided that an objective of the network device is improving rationality and correctness of the uplink power control, and the power control exception event caused by the power configuration field is avoided.

Further, after adjusting the power configuration field of the target cell, the network device may further monitor the first information reported by the terminal device for a long time, to estimate effectiveness of adjustment of the power configuration field. In addition, the network device may further, for example, periodically update a power control algorithm of the terminal device, for example, update a determining condition for the power exception event and the reporting condition for the first information, thereby optimizing exception detection and report logic.

In summary, according to the uplink power control processing method provided in this application, a new counting event for an RLF failure is introduced to provide a more precise and efficient method for counting and processing of an uplink power control exception. This method helps identify and resolve an uplink power control problem and further provides an important support for stable running and optimization of a 5G network. In addition, the above process also refines and demonstrates how to apply the method provided by this application in an actual network environment, thereby providing network operators with detailed data processing basis.

The uplink power control processing method in the embodiments of this application is described above. An apparatus for performing the uplink power control processing method provided in the embodiments of this application is described below. A person skilled in the art may understand that the method and the apparatus may be combined and mutual reference may be made, and that a related apparatus provided in an embodiment of this application may perform the steps in the foregoing uplink power control processing method.

FIG. 6 is a schematic diagram 1 of a structure of an uplink power control processing apparatus according to an embodiment of this application. As shown in FIG. 6, the apparatus 60 includes: a processing module 601 and a transceiver module 602.

The processing module 601 is configured to: in response to a power configuration field sent by a network device, adjust an uplink power of a terminal device from a first power value to a second power value. The processing module 601 is further configured to determine, based on the first power value and the second power value, whether a power control exception event occurs. The transceiver module 602 is configured to: when it is determined that the power control exception event occurs, send first information to the network device to enable the network device to adjust a power configuration field of a target cell, where the first information is used to indicate that the power control exception event occurs, and the target cell is a cell in which the power control exception event occurs.

In a possible design, the processing module 601 is specifically configured to:
determine a power drop value, where the power drop value is a difference between the first power value and the second power value; and compare the power drop value with a first preset threshold to determine whether the power control exception event occurs, where if the power drop value is greater than or equal to the first preset threshold, it is determined that the power control exception event occurs; or
compare the second power value with a second preset threshold to determine whether the power control exception event occurs, where if the second power value is less than the second preset threshold, it is determined that the power control exception event occurs.

In a possible design, the transceiver module 602 is specifically configured to:
send uplink control information to the network device, where the uplink control information includes the first information.

In a possible design, the processing module 601 is further configured to:
before the first information is sent to the network device, adjust the uplink power of the terminal device from the second power value to a third power value, where the third power value is greater than the second power value.

In a possible design, the transceiver module 602 is specifically configured to:
in response to a first request message sent by the network device, send a first response message to the network device, where the first response message includes the first information.

In a possible design, the processing module 601 is further configured to:
after it is determined that the power control exception event occurs, record event information corresponding to the power control exception event, where the event information includes at least one of the following: the power drop value, a timestamp when the power control exception event is detected, location information of occurrence of the power control exception event, and cell information of occurrence of the power control exception event.

In a possible design, the transceiver module 602 is specifically configured to:
when it is determined that the recorded event information of the power control exception event meets a reporting condition, send the first information to the network device, where there is/are one or more recorded power control exception events; and
the first information is further used to indicate at least one piece of the following content: a power drop value corresponding to each power control exception event, a timestamp corresponding to each power control exception event, location information corresponding to each power control exception event, cell information corresponding to each power control exception event, and a frequency of the power control exception event occurring within first unit duration.

In a possible design, the reporting condition includes at least one of the following: a frequency of the power control exception event occurring within second unit duration is higher than a preset frequency and a quantity of occurrences of the power control exception event within a preset time period is greater than a preset quantity.

In a possible design, the transceiver module 602 is further configured to:
after the first information is sent to the network device, receive a power control instruction sent by the network device, where the power control instruction is used to instruct an increase in the uplink power of the terminal device.

The apparatus provided in this embodiment may be configured to perform the technical solutions in the foregoing method embodiments, and implementation principles and technical effects of the apparatus and the foregoing method embodiments are similar and are not described herein again in this embodiment.

FIG. 7 is a schematic diagram 2 of a structure of an uplink power control processing apparatus according to an embodiment of this application. As shown in FIG. 7, the apparatus 70 includes: a transceiver module 701 and a processing module 702.

The transceiver module 701 is configured to: send a power configuration field to a terminal device, where the power configuration field is used to indicate to adjust an uplink power of the terminal device. The transceiver module 701 is further configured to receive first information sent by the terminal device, where the first information is used to indicate that a power control exception event occurs, and the power control exception event is determined based on a first power value before adjustment of the terminal device and a second power value after adjustment of the terminal device. The processing module 702 is configured to adjust a power configuration field of a target cell, where the target cell is a cell in which the power control exception event occurs.

In a possible design, if a power drop value is greater than or equal to a first preset threshold, the first information indicates that the power control exception event occurs, and the power drop value is a difference between the first power value and the second power value; or
if the second power value is less than a second preset threshold, the first information indicates the power control exception event.

In a possible design, the transceiver module 701 is specifically configured to:
receive uplink control information sent by the terminal device, where the uplink control information includes the first information.

In a possible design, the transceiver module 701 is specifically configured to:
send a first request message to the terminal device; and
receive a first response message sent by the terminal device in response to the first request message, where the first response message includes the first information.

In a possible design, the first information is used to indicate at least one piece of the following content: a power drop value corresponding to at least one power control exception event, a timestamp corresponding to at least one power control exception event, location information corresponding to at least one power control exception event, cell information corresponding to at least one power control exception event, and a frequency of the power control exception event occurring within first unit duration.

In a possible design, the transceiver module 701 is further configured to:
after the first information sent by the terminal device is received, send a power control instruction to the terminal device, where the power control instruction is used to instruct an increase in the uplink power of the terminal device.

The apparatus provided in this embodiment may be configured to perform the technical solutions in the foregoing method embodiments, and implementation principles and technical effects of the apparatus and the foregoing method embodiments are similar and are not described herein again in this embodiment.

It should be noted that all module names involved in embodiments of this application may be defined as other names, provided that functions of the modules can be implemented. The module names are not specifically limited.

The uplink power control processing method provided in the embodiments of this application may be applied to an electronic device having a communication function. The electronic device includes a terminal device and a network device. The following provides exemplary description.

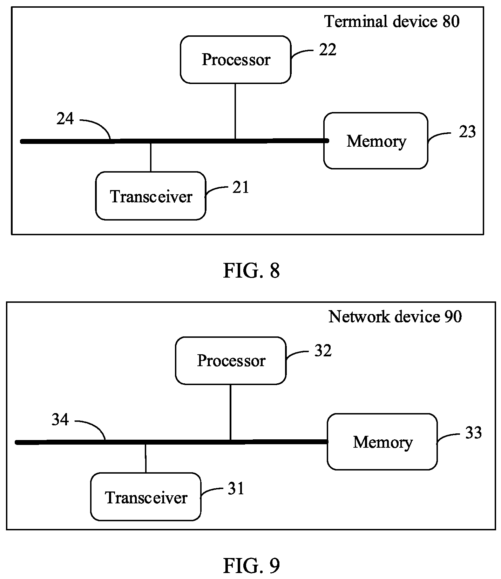

FIG. 8 is a schematic diagram of a structure of a terminal device according to an embodiment of this application. Referring to FIG. 8, a terminal device 80 may include: a transceiver 21, a memory 22, and a processor 23. The transceiver 21 may include: a transmitter and/or a receiver. The transmitter may also be referred to as a similar description such as a sender, a transmit machine, a sending port, or a sending interface. The receiver may also be referred to as a similar description such as a receiver, a receive machine, a receiving port, or a receiving interface. For example, the transceiver 21, the memory 22, and the processor 23 are connected to each other by using a bus 24.

The memory 22 is configured to store program instructions. The processor 23 is configured to execute the program instructions stored in the memory, so as to enable the terminal device 80 to perform any uplink power control processing method described above. The receiver of the transceiver 21 may be configured to perform a receiving function of the terminal device in the foregoing uplink power control processing method.

FIG. 9 is a schematic diagram of a structure of a network device according to an embodiment of this application. Referring to FIG. 9, a network device 90 may include: a transceiver 31, a memory 32, and a processor 33. The transceiver 31 may include: a transmitter and/or a receiver. The transmitter may also be referred to as a similar description such as a sender, a transmit machine, a sending port, or a sending interface. The receiver may also be referred to as a similar description such as a receiver, a receive machine, a receiving port, or a receiving interface. For example, the transceiver 31, the memory 32, and the processor 33 are connected to each other by using a bus 34.

The memory 32 is configured to store program instructions. The processor 33 is configured to execute the program instructions stored in the memory, so as to enable the network device 90 to perform any uplink power control processing method described above. The receiver of the transceiver 31 may be configured to perform a receiving function of the network device in the foregoing uplink power control processing method.

An embodiment of this application provides a chip. The chip includes a processor, and the processor is configured to invoke a computer program in a memory to execute the technical solutions in the foregoing embodiments. The implementation is similar to the foregoing related embodiments in terms of implementation principles and technical effects. Details are not described herein again.

An embodiment of this application further provides a computer-readable storage medium. The computer-readable storage medium stores a computer program. The foregoing method is implemented when the computer program is executed by a processor. All or some of the methods described in the foregoing embodiments may be implemented by using software, hardware, firmware, or any combination thereof. If implemented in software, functions may be stored in a computer-readable medium or transmitted on a computer-readable medium as one or more instructions or code. The computer-readable medium may include a computer storage medium and a communication medium, and may further include any medium that enables a computer program to be transmitted from a place to another place. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that is to carry or store required program code in a form of an instruction or a data structure, and may be accessed by a computer. In addition, any connection is appropriately referred to as a computer-readable medium. For example, if software is transmitted from a website, a server, or another remote source by using a coaxial cable, an optical fiber cable, a twisted pair, a digital subscriber line (Digital Subscriber Line, DSL), or wireless technologies (such as infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc, a laser disc, an optical disc, a digital versatile disc (Digital Versatile Disc, DVD), a floppy disk, and a Blu-ray disc, and the magnetic disk usually reproduces data magnetically, while the optical disc reproduces data optically by using a laser. A combination of the foregoing should also be included in the scope of the computer-readable medium.

An embodiment of this application provides a computer program product. The computer program product includes a computer program, and when the computer program is run, a computer is enabled to perform the foregoing method.

It should be noted that user information (including but not limited to user equipment information, personal information of a user, and the like) and data (including but not limited to data used for analysis, stored data, presented data, and the like) involved in the embodiments of this application are all information and data that are authorized by the user or that are fully authorized by each party. In addition, collection, use, and processing of the related data need to comply with relevant laws, regulations, and standards, and a corresponding operation entry is provided for the user to choose to authorize or reject.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more flows in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions in the present invention shall fall within the protection scope of the present invention.

## Claims

1. An uplink power control processing method, applied to a terminal device, wherein the method comprises:
in response to a power configuration field sent by a network device, adjusting an uplink power of the terminal device from a first power value to a second power value;
determining, based on the first power value and the second power value, whether a power control exception event occurs; and
if the power control exception event occurs, sending first information to the network device to enable the network device to adjust a power configuration field of a target cell, wherein the first information is used to indicate that the power control exception event occurs, and the target cell is a cell in which the power control exception event occurs.

2. The method according to claim 1, wherein the determining, based on the first power value and the second power value, whether a power control exception event occurs comprises:
determining a power drop value, wherein the power drop value is a difference between the first power value and the second power value; and comparing the power drop value with a first preset threshold to determine whether the power control exception event occurs, wherein if the power drop value is greater than or equal to the first preset threshold, it is determined that the power control exception event occurs; or
comparing the second power value with a second preset threshold to determine whether the power control exception event occurs, wherein if the second power value is less than the second preset threshold, it is determined that the power control exception event occurs.

3. The method according to claim 2, wherein the sending first information to the network device comprises:
sending uplink control information to the network device, wherein the uplink control information comprises the first information.

4. The method according to claim 3, wherein before the sending first information to the network device, the method further comprises:
adjusting the uplink power of the terminal device from the second power value to a third power value, wherein the third power value is greater than the second power value.

5. The method according to claim 2, wherein the sending first information to the network device comprises:
in response to a first request message sent by the network device, sending a first response message to the network device, wherein the first response message comprises the first information.

6. The method according to claim 5, wherein after it is determined that the power control exception event occurs, the method further comprises:
recording event information corresponding to the power control exception event, wherein the event information comprises at least one of the following: the power drop value, a timestamp when the power control exception event is detected, location information of occurrence of the power control exception event, and cell information of occurrence of the power control exception event.

7. The method according to claim 6, wherein the sending first information to the network device comprises:
when it is determined that the recorded event information of the power control exception event meets a reporting condition, sending the first information to the network device, wherein there is/are one or more recorded power control exception events; and
the first information is further used to indicate at least one piece of the following content: a power drop value corresponding to each power control exception event, a timestamp corresponding to each power control exception event, location information corresponding to each power control exception event, cell information corresponding to each power control exception event, and a frequency of the power control exception event occurring within first unit duration.

8. The method according to claim 7, wherein the reporting condition comprises at least one of the following: a frequency of the power control exception event occurring within second unit duration is higher than a preset frequency and a quantity of occurrences of the power control exception event within a preset time period is greater than a preset quantity.

9. The method according to any one of claims 1 to 8, wherein after the sending first information to the network device, the method further comprises:
receiving a power control instruction sent by the network device, wherein the power control instruction is used to instruct an increase in the uplink power of the terminal device.

10. An uplink power control processing method, applied to a network device, wherein the method comprises:
sending a power configuration field to a terminal device, wherein the power configuration field is used to indicate to adjust an uplink power of the terminal device;
receiving first information sent by the terminal device, wherein the first information is used to indicate that a power control exception event occurs, and the power control exception event is determined based on a first power value before adjustment of the terminal device and a second power value after adjustment of the terminal device; and
adjusting a power configuration field of a target cell, wherein the target cell is a cell in which the power control exception event occurs.

11. The method according to claim 10, wherein if a power drop value is greater than or equal to a first preset threshold, the first information indicates that the power control exception event occurs, and the power drop value is a difference between the first power value and the second power value; or
if the second power value is less than a second preset threshold, the first information indicates the power control exception event.

12. The method according to claim 11, wherein the receiving first information sent by the terminal device comprises:
receiving uplink control information sent by the terminal device, wherein the uplink control information comprises the first information.

13. The method according to claim 11, wherein the receiving first information sent by the terminal device comprises:
sending a first request message to the terminal device; and
receiving a first response message sent by the terminal device in response to the first request message, wherein the first response message comprises the first information.

14. The method according to claim 13, wherein the first information is used to indicate at least one piece of the following content: a power drop value corresponding to at least one power control exception event, a timestamp corresponding to at least one power control exception event, location information corresponding to at least one power control exception event, cell information corresponding to at least one power control exception event, and a frequency of the power control exception event occurring within first unit duration.

15. The method according to any one of claims 10 to 14, wherein after the receiving first information sent by the terminal device, the method further comprises:
sending a power control instruction to the terminal device, wherein the power control instruction is used to instruct an increase in the uplink power of the terminal device.

16. An uplink power control processing apparatus, comprising:
a processing module, configured to: in response to a power configuration field sent by a network device, adjust an uplink power of the terminal device from a first power value to a second power value, wherein
the processing module is further configured to determine, based on the first power value and the second power value, whether a power control exception event occurs; and
a transceiver module, configured to: when it is determined that the power control exception event occurs, send first information to the network device to enable the network device to adjust a power configuration field of a target cell, wherein the first information is used to indicate that the power control exception event occurs, and the target cell is a cell in which the power control exception event occurs.

17. An uplink power control processing apparatus, comprising:
a transceiver module, configured to send a power configuration field to a terminal device, wherein the power configuration field is used to indicate to adjust an uplink power of the terminal device, and
the transceiver module is further configured to receive first information sent by the terminal device, wherein the first information is used to indicate that a power control exception event occurs, and the power control exception event is determined based on a first power value before adjustment of the terminal device and a second power value after adjustment of the terminal device; and
a processing module, configured to adjust a power configuration field of a target cell, wherein the target cell is a cell in which the power control exception event occurs.

18. A terminal device, wherein the terminal device comprises one or more processors and a memory;
the memory is coupled to the one or more processors, the memory is configured to store computer program code, the computer program code comprises computer instructions, and the one or more processors invoke the computer instructions to enable the terminal device to perform the method according to any one of claims 1 to 9.

19. A network device, wherein the network device comprises one or more processors and a memory;
the memory is coupled to the one or more processors; the memory is configured to store computer program code; the computer program code comprises computer instructions; and the one or more processors invoke the computer instructions to enable the network device to perform the method according to any one of claims 10 to 15.

20. A chip system, wherein the chip system comprises one or more processors, and the one or more processors are configured to invoke computer instructions to perform the methods according to any one of claims 1 to 15.

21. A computer-readable storage medium, wherein the computer-readable storage medium stores a computer program, and when the computer program is executed by a processor, the methods according to any one of claims 1 to 15 are implemented.

22. A computer program product, comprising a computer program, wherein when the computer program is run, a computer is enabled to perform the methods according to any one of claims 1 to 15.
